# EUROPEAN PATENT APPLICATION

(11) **EP 1 760 687 A2**
(43) Date of publication of application: **07.03.2007**
(21) Application number: 06119451.0
(22) Date of filing: 24.08.2006
(51) Int. Cl.: G09G 3/34

(54) **Backlight unit**

(30) Priority: 31.08.2005 KR 20050080764
(71) Applicant: Samsung Electronics Co., Ltd., Suwon-si, Gyeonggi-Do (KR)
(72) Inventor: Seong, Ki-bum, Mokryeon Woonsung Apt., Anyang-si, Gyeonggi-do (KR); Lee, Sang-hoon, Ulsan-city (KR); Kim, Su-gun, Taean-eup, Hwaseong-si, Gyeonggi-do (KR); Kang, Jeong-il, Sunny-valley Apt. 104-1603, Gyeonggi-do (KR); Cho, Tae-hee, Doosan Apt. 107-1004, Seoul (KR)
(74) Representative: Read, Matthew Charles

(57) **Abstract**

A backlight unit (400) for a display device such as a liquid crystal display (LCD) (1) comprises a light source unit (440) divided into a plurality of independently driven divisions (445), one or more driving parts (431) arranged to selectively supply electric power to at least two of the divisions (445). In this manner, the backlight unit (400) may comprise fewer driving parts (431) than divisions (445). The divisions (445) connected to the same driving part (431) are preferably non-adjacent and parallel to each other. The divisions (445) can be driven in sequence repeatedly so that adjacent divisions (445) are driven for overlapping time periods.

## Description

The present invention relates to a backlight unit, a display device having the same, and a method of providing controlling a light source. More particularly, the present invention relates to a backlight unit having a divided configuration, a display device having the same and method of controlling a light source having a divided configuration.

Recently, flat display devices, such as liquid crystal displays (LCDs), plasma display panels (PDPs) and organic light emitting diodes (OLEDs), have been developed as replacements for cathode ray tubes (CRTs).

A LCD comprises a LCD panel having a thin film transistor (TFT) substrate and a color filter substrate, between which liquid crystals are interposed. The LCD panel does not generate light itself. Instead, a backlight unit is disposed behind the TFT substrate in order to provide illumination for the LCD panel. Transmittance of the light output by the backlight unit is adjusted according to the alignments of the liquid crystals, which are in turn controlled by the TFTs.

The LCD panel and the backlight unit are accommodated in a casing.

The backlight unit may be an edge type backlight unit or a direct type backlight unit, according to a position of a light source therein.

In an edge type backlight unit, the light source is installed on a side of a light guiding plate. The edge type backlight unit is typically used with small LCD devices such as monitors for laptop computers or monitors for desktop computers. The edge type backlight unit provides various advantages, such as a high uniformity of output light, long life and so on. Furthermore, the overall thickness of the LCD may be small due to use of an edge type backlight unit.

The development of direct type backlight units has been motivated by the development of large-screen LCDs. In a direct type backlight unit, a plurality of light sources are disposed behind the LCD panel and arranged to emit light directly towards the surface of the LCD panel. The direct type backlight unit uses a greater number of light sources than the edge type backlight unit. Thus, the output of a direct type backlight unit may have a higher brightness, although the brightness distribution is not uniform.

Point light sources, such as light emitting diodes (LEDs), have gained prominence as light sources for direct type backlight units. White light can be produced by mixing light from point light sources that emit light of different colors.

In one method for driving a backlight unit, the light source is switched on according to the input of a scanning signal of the LCD panel, thereby improving the quality of moving images. However, this method requires the light source to be divided into a plurality of areas which are driven independently. Consequently, each area requires its own driving part.

There is a need for an improved backlight unit, device employing the same and method for providing a light source having such a divided configuration.

Another object of the present invention is the provision of a LCD comprising a backlight unit having a light source unit which is divided into simple configurations that are efficiently driven.

According to a first aspect of the invention, a backlight unit comprises a light source unit divided into a plurality of divisions which are driven independently of each other, a light source driving unit supplying power to the light source unit and comprising at least one driving part which is connected to at least two of the divisions, and a light source controller arranged to control the light source driving unit to selectively supply power to the divisions connected to the driving part.

This aspect also provides a display device comprising a display panel, for instance, a LCD panel, together with said backlight unit, wherein the light source controller is arranged to supply power to the divisions in correspondence with image scanning of the display panel.

The light source unit may comprise a light emitting diode.

The light source unit may be divided so that each of the plurality of divisions has a bar shape and the divisions are parallel to one another.

The light source controller may control the light source driving unit so as to supply power to the divisions sequentially and repeatedly.

The light source controller may be arranged so that time intervals during which power is supplied to the adjacent divisions partially overlap.

The divisions connected to the driving part may be separated from each other.

According to a second aspect of the invention, a backlight unit comprises a light source unit divided into a plurality of divisions which are driven independently of each other, a light source driving unit supplying power to the light source unit and comprising at least one light source driving part, wherein the number of light source driving parts is less than the number of divisions, and a light source controller controlling the light source driving unit so as to supply power to the divisions sequentially and repeatedly.

This aspect also provides a display device comprising a display panel, for instance, a LCD panel, together with said backlight unit, wherein the light source controller is arranged to supply power to the divisions in correspondence with image scanning of the display panel.

The light source controller may control the light source driving group unit so as to selectively supply power to the divisions connected to the driving part.

The light source unit may comprise a light emitting diode.

The light source unit may be divided so that each of the plurality of divisions has a bar shape and the divisions are parallel with each other.

The light source controller may control the light source driving unit so as to supply power to the divisions sequentially and repeatedly.

The divisions connected to the driving part may be separated from each other.

The display panel may comprise a liquid crystal display panel.

According to a third aspect of the invention, a method of controlling a light source divided into a plurality of divisions, comprises providing power to a first division of the light source during a first time interval, starting at a first time and having a first duration, providing power to a second division of the light source during a second time interval, starting at a second time and having a second duration, wherein the first time is different than the second time, the first duration is substantially the same as the second duration, and the first and second time intervals partially overlap.

The power provided to the first division may be supplied by a first driving part and the power provided to the second division may be supplied by a second driving part.

The first division may be separate from the second division.

The method may further comprise providing power to a third division of the light source from the first driving part, and providing power to a fourth division of the light source from the second driving part.

The first driving part may supply power to the first and third divisions of the light source at different times and the second driving part may supply power to the second and fourth divisions of the light source at different times.

The method may further comprise supplying power to the first, second, third and fourth divisions of the light source sequentially and repeatedly.

According to a fourth aspect of the invention, a method of controlling a light source divided into a plurality of divisions comprises providing power from a first driving part to a first group of divisions, comprising at least two of a plurality of divisions of the light source, the power being provided to the first group of divisions at different times, providing power from a second driving part to a second group of divisions, comprising at least two of the plurality of divisions of the light source, the power being provided to the second group of divisions at different times, wherein the first group of divisions are separate from one another and the second group of divisions are separate from one another.

Other objects, advantages, and salient features of the invention will become apparent from the detailed description, which, taken in conjunction with the annexed drawings, discloses examples of embodiments of the invention.

Example embodiments of the invention will now be described with reference to the accompanying drawings, in which:
Figure 1 is a block diagram of a LCD according to a first embodiment of the present invention;
Figure 2 is a cross-sectional view of the LCD of Figure 1;
Figure 3 shows a connection between a light source unit and a light source driving unit in the LCD of Figure 1;
Figure 4 shows how to drive divisions of the light source unit of the LCD of Figure 1;
Figure 5 depicts the driving the light source unit in the LCD of Figure 1;
Figures 6 and 7 show a connection between a light source unit and a light source driving unit according to a second embodiment and a third embodiment of the present invention, respectively.

Throughout the drawings, the same drawing reference numerals will be understood to refer to the same elements, features, and structures. Also, descriptions of well-known functions and constructions are omitted for clarity and conciseness.

In the following discussion, a LED will be used as an example of a point light source. However, the invention is not limited to arrangements comprising LEDs. Other point light sources that may be incorporated into the LCDs of the embodiments may be used in place of LEDs without departing from the scope of the present invention. Also, a LCD will be used as an example of a display device, although the invention is not limited thereto. Other display devices comprising a backlight unit would also be within the scope of the present invention.

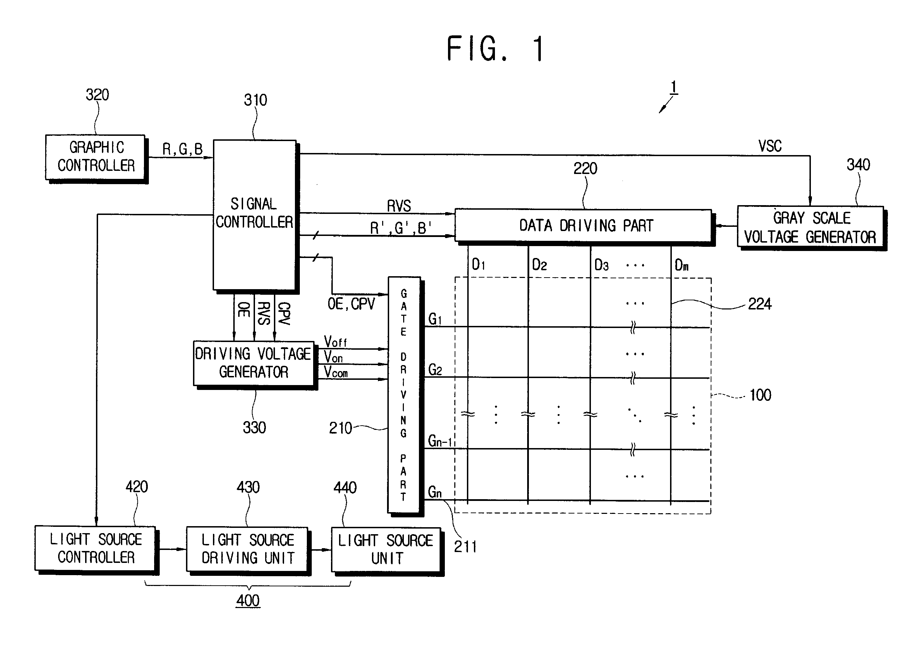

Referring to Figures 1 through 3, a first embodiment of the present invention will be described.

A LCD 1 comprises a LCD panel 100, a gate driving part 210, a data driving part 220, a driving voltage generator 330, a gray scale voltage generator 340 and a signal controller 310. The gate driving part 210 and the data driving part 220 are connected to the LCD panel 100. The driving voltage generator 330 is connected to the gate driving part 210 and the gray scale voltage generator 340 is connected to the data driving part 220. The signal controller 310 controls the gate driving part 210, the data driving part 220, the driving voltage generator 330 and the gray scale voltage generator 340. As input, the signal controller 310 receives image data from a graphic controller 320. A backlight unit 400 is disposed behind the LCD panel 100 to provide illumination. The backlight unit 400 comprises a light source unit 440, a light source driving unit 430 to drive the light source unit 440 and a light source controller 420 to control the light source driving unit 430.

The LCD panel 100 comprises a color filter substrate 111 where color filters are provided and a TFT substrate 121 on which TFTs are formed. A sealant 131 is provided along the edges of both substrates 111 and 112. A liquid crystal layer 141 is disposed between the two substrates 111 and 112 and the sealant 131.

The driving voltage generator 330 generates a gate-on voltage (Von) switching on the TFTs, a gate-off voltage (Voff) switching off the TFTs and a common voltage (Vcom) supplied to a common electrode.

The gray scale voltage generator 340 generates a plurality of gray scale voltages relating to brightness of the LCD 1 and provides the voltage to the data driving part 220.

The gate driving part 210, called a scan driver, is connected to a gate line 211 to apply a gate signal comprising a combination of the gate-on voltage (Von) and the gate-off voltage (Voff) which are generated by the driving voltage generator 330.

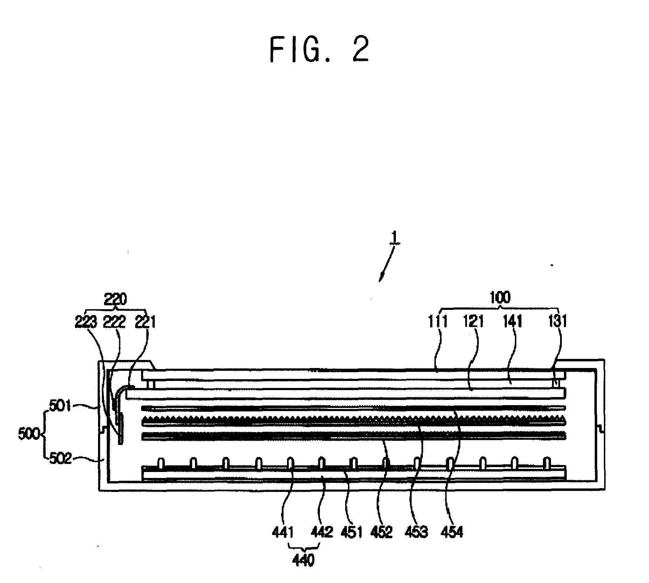

The data driving part 220, called a source driver, is supplied with a gray scale voltage from the gray scale voltage generator 340 and selectively applies the gray scale voltage as a data signal to each data line 224, under the control of the signal controller 310. The data driving part 220 comprises a flexible printed circuit (FPC) 221 connected to the TFT substrate 121 at one side thereof. A driving chip 222 is mounted on the FPC 221, while a printed circuit board (PCB) 223 is connected to another side of the FPC 221. The data driving part 220 shown in Figure 2 is of chip on film (COF) type. However, the data driving part 220 may be of any well-known type, such as tape carrier package (TCP), chip on glass (COG) or the like. The gate driving part 210 may be of the same type as the data driving part 220 or may be provided on the TFT substrate 121.

The signal controller 310 generates control signals controlling the gate driving part 210, the data driving part 220, the driving voltage generator 330 and the gray scale voltage generator 340 and applies them thereto.

The light source unit 440 comprises a plurality of LEDs 441, mounted on a LED circuit board 442 that is disposed behind the LCD panel 100. The LEDs 441 emit red, green and blue light respectively, thereby providing white color light to the LCD panel 100. The LEDs 441 may be arranged in various ways.

A reflecting plate 451 reflects light generated by the LEDs 441 towards the LCD panel 100. The reflecting plate 451 extends across the LED circuit board 442, except for those portions on which the LEDs 441 are disposed.

If the light from the LEDs 441 were provided directly to the LCD panel 100, the arrangement of the LEDs 441 may result in the brightness distribution of the light supplied to the LCD panel 100 being non-uniform. In order to prevent such nonuniformity, a diffusion film 452 diffuses the light evenly. The diffusion film 452 comprises a base plate and a coating layer having beads formed on the base plate.

A prism film 453 collimates the light diffused from the diffusion film 452, so that it is directed perpendicularly to a surface of the LCD panel 100. The prism film 453 comprises triangular prisms formed in an arrangement thereon. Typically, two prism films 453 are used and arranged so that the micro prisms formed on each of the prism films 453 make an angle with each other. The light passing through the prism film 453 mostly continues perpendicularly, thereby forming a uniform brightness distribution. A protection film 454 is provided in front of the prism films 453. The protection film 454 protects the prism films 453, which are otherwise vulnerable to scratching.

A casing 500, comprising an upper casing 501 and a lower casing 502, accommodates the LCD panel 100 and the LEDs 441.

The operation of the LCD 1 will now be described.

The signal controller 310 receives RGB image data (R, G, B) and an input control signal (not shown) controlling the same from the graphic controller 320. The input control signal may comprise a vertical synchronizing signal (Vsync), a horizontal synchronizing signal (Hsync), a main clock signal (CLK), a data enable signal (DE) and the like. The signal controller 310 generates a gate control signal (not shown), a data control signal (not shown) and a voltage selection control signal (VSC) based on the input control signal and converts the image data (R, G, B) into a form suitable for an operation of the LCD panel 100. Then, the signal controller 310 applies the gate control signal to the gate driving part 210 and the driving voltage generator 330, applies the data control signal and the converted image data (R', G', B') to the data driving part 220, and applies the voltage selection control signal (VSC) to the gray scale voltage generator 340.

The gate control signal (not shown) comprises a vertical synchronization start signal (STV, not shown) indicating a start to output a gate on pulse (gate signal in a high range), a gate clock signal (CPV) controlling output time of the gate on pulse, a gate on enable signal (OE) defining the width of the gate on pulse and the like. Of these signals, the gate on enable signal (OE) and the gate clock signal (CPV) are applied to the driving voltage generator 330 and the gate driving part 210. The data control signal comprises a horizontal synchronization start signal (STH, not shown) indicating a start to input a gray scale signal, a load signal (LOAD or TP, not shown) applying a data voltage to the data line, a reverse control signal (RVS) reversing polarity of the data voltage, a data clock signal (HCLK, not shown) and the like.

The gray scale voltage generator 340 supplies the gray scale voltage, which has a voltage value corresponding to the voltage selection control signal (VSC), to the data driving part 220.

The gate driving part 210 supplies the gate-on voltage (Von) to a gate line 211 in accordance with the gate control signal from the signal controller 310, thereby switching on the TFTs which are connected to the gate line 211. At the same time, the data driving part 220 supplies the corresponding data line 224 with an analog data voltage from the gray scale voltage generator 340 in accordance with the data control signal from the signal controller 310. The analog data voltage is a data signal corresponding to the image data (R', G', B'). The data signal, and thus image data, is supplied to a pixel comprising a switching element which is switched on by the gate-on voltage.

The data signal applied to the data line 224 is applied to a corresponding pixel through a switched-on TFT. In this method, the gate-on voltage (Von) is applied to the gate lines 211 in order during one frame, thereby applying the data signal to every pixel. When the reverse control signal (RVS) is applied to the driving voltage generator 330 and the data driving part 220 after one frame is finished, the polarities of all the data signals in a next frame are changed.

An example of a method of driving the light source unit 440 while the LCD panel 100 forms a picture will now be described.

The light source unit 440 is divided into a plurality of sections, or divisions 445, (for example, horizontal divisions 1-10) which are driven independently of each other. In this example, the divisions 445 have substantially the same area, a bar shape and are disposed so that they are parallel with each other. The divisions 445 are also parallel with the gate line 211.

The light source driving unit 430, which supplies electric power to the light source unit 440, comprises a plurality of driving parts 431. In this case, the driving parts 431 are multi-driving parts, that is, driving parts arranged to drive more than one division 445. The number of the driving parts 431 is less than the number of the ivisions 445. For example, in the first embodiment, there are ten divisions 445 and five driving parts 431.

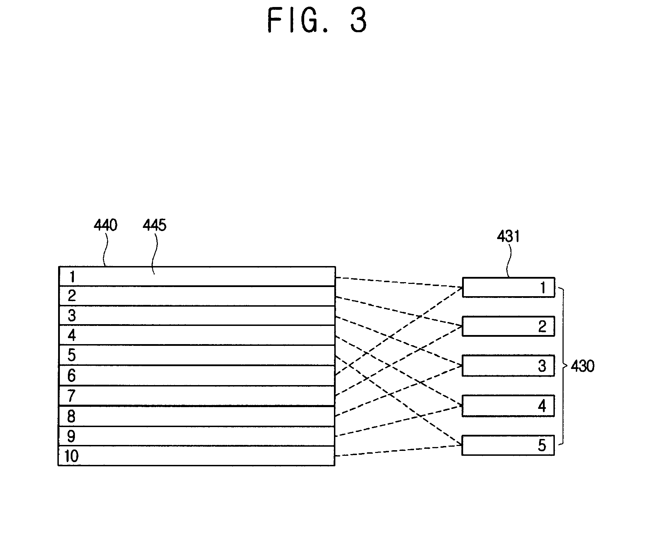

Each of the driving parts 431 is connected to two divisions 445 to supply power. A pair of divisions 445 which are connected to the same driving part 431 are separated from each other. In other words, the divisions 445 connected to the same driving part 431 are not adjacent to each other. For example, in the embodiment depicted in Figure 3, the first driving part 431 is connected to the first division 445 and the sixth division 445, which are separated from each other by the second through fifth divisions.

The light source controller 420 is connected to the signal controller 310 to control the light source driving unit 430 so that the respective divisions 445 are driven in correspondence with the scanning of the LCD panel 100. Accordingly, the divisions 445 are driven in sequence repeatedly.

Also, the light source controller 420 controls the light source driving unit 430 so that a pair of divisions 445 connected to the same driving part 431 are driven at regular intervals. Accordingly, the pair of divisions 445 may be driven by the same driving part 431 without interfering with each other, thereby simplifying the configuration of the light source driving unit 430.

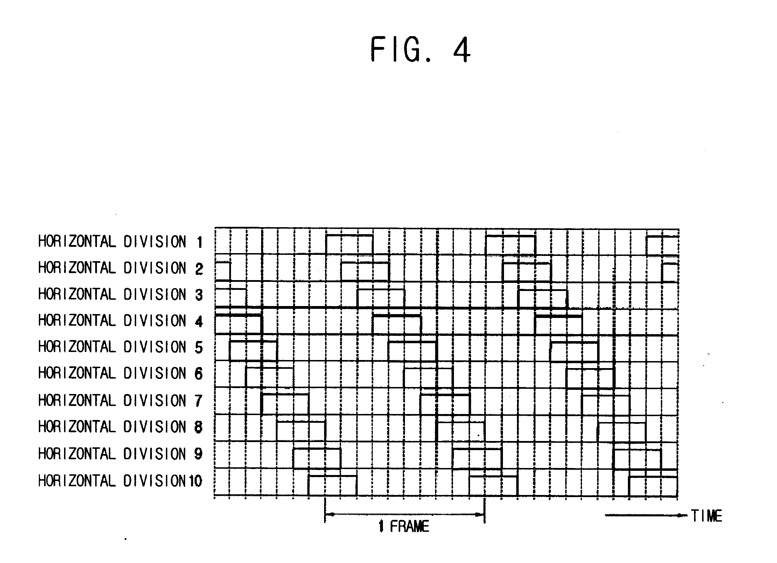

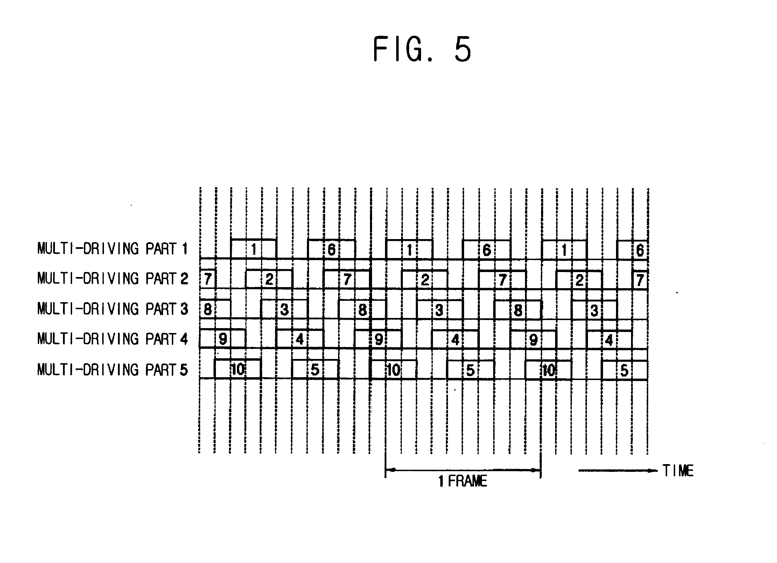

An example of a method of driving a light source unit 440 will now be described with reference to Figures 4 and 5.

Figure 4 depicts a method of driving the light source unit, with reference to the divisions 445 of the first embodiment of the present invention, and Figure 5 shows a method of driving the light source unit, with reference to the driving parts of the first embodiment of the present invention.

As shown in Figure 4, an image frame (1 FRAME) is divided into ten periods, as indicated by the vertical grid lines. Each of the divisions 445 (in other words, horizontal divisions 1-10) is driven for three periods in each frame.

Furthermore, each of the divisions 445 is driven such that, at any given instant within a frame, three different divisions are being driven. Also, the driving of a division 445 (for example, horizontal division 3) begins one time period after the driving of a previous division 445 (for example, horizontal division 2) has commenced. In this manner, two consecutive divisions 445 (for example horizontal divisions 2 and 3) are each driven for three consecutive periods, but are driven simultaneously during only two periods. Likewise, ten divisions 445 are driven for one frame.

The instant at which the driving of the first division 445 commences is substantially the same as the instant at which the gate-on voltage is applied to the first gate line 211.

As shown in Figure 5, the sixth division 445 starts to be driven two periods after driving of the first division 445 has stopped, the first division 445 and the sixth division 445 both being connected to the first driving part 431. Likewise, the first division 445 is re-driven two periods after the driving of the sixth division 445 has ceased. Thus, the pair of divisions 445 may be driven by the same driving part 431 without interfering with each other.

In this manner, a number of driving parts 431 that is less than the number of divisions 445 may be used to drive the light source unit 440.

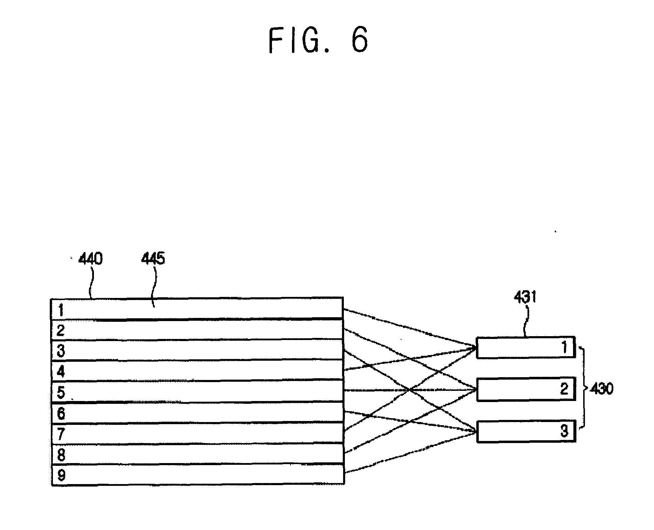

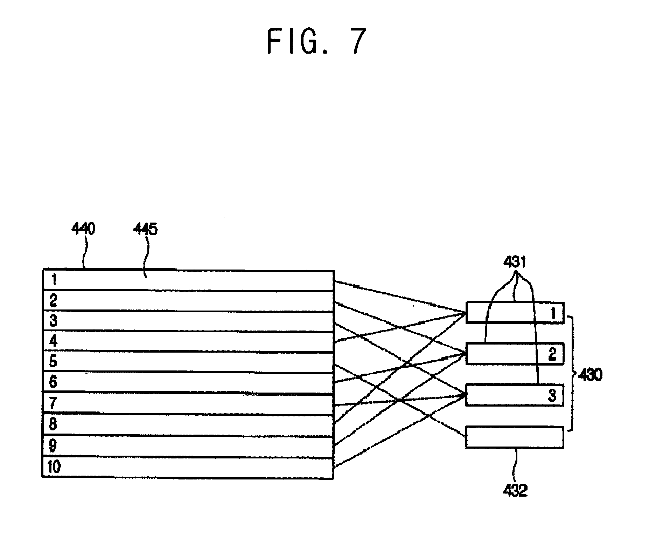

Figures 6 and 7 depict connections between a light source unit and a light source driving unit according to a second embodiment and a third embodiment of the present invention, respectively.

According to the second embodiment shown in Figure 6, there are provided nine divisions, horizontal divisions 445, and three driving parts. Each of the driving parts 431 is connected to three divisions 445. The divisions 445 connected to the same driving part 431 are non-adjacent. In other words, the divisions 445 connected to the same driving part 431 are separated from one another.

The number of the divisions 445 connected to a single driving part 431 may vary according to the number of divisions of the light source unit 440, the time interval over which a single division 445 is driven and the like.

According to the third embodiment, shown in Figure 7, there are provided ten divisions 445, in the form of horizontal divisions. A light source driving unit 430 comprises three multi-driving parts 431 and one single-driving part 432. Each of the multi-driving parts 431 is connected to three divisions 445. The divisions 445 connected to the same multi-driving part 431 are separated from one another.

The driving parts of the light source driving unit 430 may include both multi-driving parts 431 and single-driving parts 432 depending on the number of the divisions 445. Also, the light source driving unit 430 may comprise multi-driving parts 431 connected to different numbers of divisions.

While the invention has been shown and described with reference to example embodiments thereof, it will be understood by those skilled in the art that various changes in form and details may be made therein without departing from the scope of the invention as defined by the appended claims.

## Claims

1. A backlight unit (400), comprising:
a light source unit (440) comprising a plurality of divisions (445);
a light source driving unit (430) comprising at least one driving part (431) which is connected to at least two of said divisions (445); and
a light source controller (420) arranged to control the light source driving unit (430) to selectively supply the power to the divisions (445).

2. The backlight unit (400) of claim 1, wherein the light source unit (440) comprises a light emitting diode (441).

3. The backlight unit (400) of claim 1 or 2, wherein each of the divisions (445) has a bar shape and the divisions (445) are arranged to be parallel with each other.

4. The backlight unit (400) of claim 1, 2 or 3, wherein the light source controller (420) is arranged to control the light source driving unit (430) to supply power to the divisions (445) in sequence repeatedly.

5. The backlight unit (400) of claim 4, wherein the power is supplied to adjacent ones of said divisions (445) during first and second time periods respectively, wherein the first and second time periods overlap each other.

6. The backlight unit (400) of any one of the preceding claims, wherein the at least two divisions (445) connected to the driving part (431) are non-adjacent to each other.

7. A backlight unit (400), comprising:
a light source unit (440) comprising a plurality of divisions (445);
a light source driving unit (430) comprising at least one light source driving part (431) and arranged to supply power to the light source unit (440), wherein the number of light source driving parts (431) is less than the number of divisions (445); and
a light source controller (420) arranged to control the light source driving unit (430) to supply power to the divisions (445) in sequence repeatedly.

8. A display device (1), comprising:
a display panel (100);
a backlight unit (400) according to any one of claims 1 to 7, arranged to illuminate the display panel (100);
wherein the light source controller (420) is arranged to control the light source driving unit (430) to supply power to the divisions (445) in correspondence with image scanning of the display panel (100).

9. The display device (1) of claim 8, wherein the display panel (100) comprises a liquid crystal display panel.

10. A method of controlling a light source (440) that is divided into a plurality of divisions (445), comprising:
providing power to a first one of said divisions (445) for a first time interval starting at a first time and having a first duration;
providing power to a second one of said divisions (445) for a second time interval starting at a second time and having a second duration;
wherein the first time is different than the second time, the first duration is substantially the same as the second duration and the first and second time intervals partially overlap.

11. The method of claim 10, wherein the power provided to the first division (445) is from a first driving part (431) arranged to supply power to the first division (445) and the power provided to the second division (445) is from a second driving part (431) arranged to supply power to the second division (445).

12. The method of claim 10 or 11, wherein the first division is non-adjacent to the second division.

13. The method of claim 10, 11 or 12, further comprising:
providing power to a third one of said divisions (445) from the first driving part (431); and
providing power to a fourth one of said divisions (445) from the second driving part (431).

14. The method of claim 13, wherein the first driving part (431) supplies power to the first and third divisions (445) at different times and the second driving part (431) supplies power to the second and fourth divisions (445) at different times.

15. The method of claim 13 or 14, further comprising supplying power to the first, second, third and fourth divisions in sequence repeatedly.

16. A method of controlling a light source divided into a plurality of divisions, comprising:
providing power to a first group, comprising at least two of said divisions (445), using a first driving part (431), the power being provided to the divisions (445) of said first group over different time intervals; and
providing power to a second group, comprising at least two of said divisions (445), using a second driving part (431), the power being provided to the divisions (445) of said second group over different time intervals;
wherein the divisions (445) of the first group are non-adjacent to each other and the divisions of the second group are non-adjacent to each other.
